(19) Europäisches Patentamt European Patent Office Office européen des brevets

(11) **EP 3 165 787 B1**

(12) **FASCICULE DE BREVET EUROPEEN**

(45) Date de publication et mention de la délivrance du brevet:
**02.05.2018 Bulletin 2018/18**

(51) Int Cl.:
***F16F 15/14*** *(2006.01)*

(21) Numéro de dépôt: **16195731.1**

(22) Date de dépôt: **26.10.2016**

(54) **PROCÉDÉ D'ACCORDAGE ENTRE UN GROUPE MOTOPROPULSEUR DE VEHICULE ET UN DISPOSITIF D'AMORTISSEMENT PENDULAIRE**

ABSTIMMUNGSVERFAHREN ZWISCHEN EINEM MOTORANTRIEBSSTRANG EINES FAHRZEUGS UND EINER PENDEL-DÄMPFUNGSVORRICHTUNG

TUNING METHOD BETWEEN A VEHICLE POWER TRAIN AND A PENDULAR SHOCK-ABSORBER DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.11.2015 FR 1560572**

(43) Date de publication de la demande:
**10.05.2017 Bulletin 2017/19**

(73) Titulaire: **Valeo Embrayages**
**80009 Amiens Cedex 2 (FR)**

(72) Inventeur: **MAHE, Hervé**
**80480 SALOUEL (FR)**

(74) Mandataire: **Cardon, Nicolas et al**
**Valeo Embrayages**
**Sce Propriété Intellectuelle**
**Le Delta**
**14, avenue des Béguines**
**95892 Cergy Pontoise Cedex (FR)**

(56) Documents cités:
**FR-A1- 3 020 429         US-A1- 2010 242 466**
**US-A1- 2014 102 398**

## Description

La présente invention concerne un groupe motopropulseur de véhicule avec au moins un dispositif d'amortissement pendulaire.

L'invention s'applique notamment aux véhicules dits « passagers ». L'invention peut encore s'appliquer aux véhicules dits « industriels », ces derniers étant par exemple des poids lourds, des véhicules de transport en commun, ou des véhicules agricoles.

Dans une telle application, le dispositif d'amortissement pendulaire peut être intégré à un système d'amortissement de torsion d'un embrayage apte à relier sélectivement le moteur thermique à la boîte de vitesses, afin de filtrer les oscillations de torsion dues aux acyclismes du moteur. Un tel système d'amortissement est par exemple un double volant amortisseur.

En variante, dans une telle application, le dispositif d'amortissement pendulaire peut être intégré à un disque de friction de l'embrayage, à une boîte de vitesses, robotisée ou non, ou à un convertisseur de couple hydrodynamique.

Un tel dispositif d'amortissement pendulaire met classiquement en oeuvre un support et un ou plusieurs corps pendulaires mobiles par rapport à ce support, le déplacement par rapport au support des corps pendulaires étant guidé par des organes de roulement coopérant d'une part avec des pistes de roulement solidaires du support, et d'autre part avec des pistes de roulement solidaires des corps pendulaires. Chaque corps pendulaire comprend par exemple deux masses pendulaires reliées entre elles par un ou plusieurs organes de liaison.

Le dispositif d'amortissement pendulaire est généralement accordé à une valeur d'ordre étant égale à l'ordre d'excitation du moteur thermique du groupe motopropulseur ou à un multiple de cet ordre d'excitation du moteur thermique. On désigne par « ordre d'excitation d'un moteur thermique » le nombre d'explosions de ce moteur par tour de vilebrequin. En fonction de l'emplacement du dispositif d'amortissement pendulaire dans le groupe motopropulseur et/ou de la nature des constituants de ce groupe motopropulseur, il s'avère souhaitable de modifier la valeur d'ordre à laquelle est accordé le dispositif d'amortissement pendulaire pour que ce dernier soit accordé à une valeur d'ordre supérieure à l'ordre d'excitation du moteur thermique, cas dit de « surtuning », ou à une valeur d'ordre inférieure à l'ordre d'excitation du moteur thermique, cas dit de « sous-tuning ».

FR3020429 divulgue un procédé d'accordage selon le préambule de la revendication 1. Il existe un besoin pour déterminer, de façon fiable, si le dispositif d'amortissement pendulaire intégré au groupe motopropulseur doit être sur-tuné ou sous-tuné.

L'invention vise à répondre à ce besoin et elle y parvient, selon l'un de ses aspects, à l'aide d'un procédé de détermination du signe de la différence entre:

- l'ordre d'excitation du moteur thermique d'un groupe motopropulseur que l'on cherche à filtrer, et
- la valeur d'ordre à laquelle est accordé le dispositif d'amortissement pendulaire permettant ce filtrage,

procédé dans lequel, connaissant l'expression, en fonction de la vitesse de rotation du vilebrequin de l'inertance d'un composant du groupe motopropulseur disposé dans le chemin du couple en aval du vilebrequin et en amont des roues du véhicule,

- on détermine le signe de cette inertance sur une plage de valeurs donnée de vitesse de rotation du vilebrequin, et
- on choisit le signe de la différence entre les valeurs d'ordre ci-dessus de manière à ce que le rapport entre l'inertance du dispositif d'amortissement pendulaire et l'inertance de ce composant du groupe motopropulseur ait un signe négatif sur cette plage de valeurs donnée de vitesse de rotation du vilebrequin .

L'invention se fonde ainsi sur le signe du rapport entre l'inertance du dispositif d'amortissement pendulaire et l'inertance du composant du groupe motopropulseur dans la plage de valeurs donnée de vitesse de rotation du vilebrequin pour déterminer si le dispositif d'amortissement pendulaire doit être sur-tuné ou sous-tuné.

Au sens de la présente demande, l'inertance caractérise de façon classique la façon dont une structure réagit vibratoirement à la sollicitation d'un effort, l'inertance étant égale au rapport entre l'accélération de cette structure et le couple exercé en un point de cette structure par cette sollicitation.

Au sens de la présente demande, « en amont », « en aval », « en entrée » et « en sortie » se réfèrent au sens de transmission du couple depuis le moteur thermique du groupe motopropulseur jusqu'aux roues du véhicule.

Le composant du groupe motopropulseur dont l'inertance est prise en compte pour déterminer si le dispositif d'amortissement pendulaire doit être sous-tuné ou sur-tuné peut être mobile en rotation par rapport au vilebrequin, par exemple via un organe de rappel élastique ou via plusieurs organes de rappel élastiques montés en parallèle.

Le dispositif d'amortissement pendulaire peut être intégré à ce composant. En variante, le dispositif d'amortissement pendulaire peut être disposé en amont de ce composant, ayant par exemple un support solidaire du vilebrequin.

Selon un premier exemple de mise en oeuvre de l'invention, le groupe motopropulseur comprend un double volant amortisseur et le composant comprend :

- le volant secondaire du double volant amortisseur,
- l'embrayage,
- la boîte de vitesses,

- l'arbre de propulsion, et
- le différentiel.

Le composant désigne dans ce cas le bloc qui est :

- en aval des organes de rappel élastique reliant le volant primaire et le volant secondaire du double volant amortisseur, ce volant primaire étant solidaire en rotation du vilebrequin, et
- en amont des roues du véhicule.

Le dispositif d'amortissement pendulaire peut être intégré au double volant amortisseur, ayant de préférence un support solidaire du volant secondaire du double volant amortisseur ou un support réalisé d'une seule pièce avec ce volant secondaire. En variante, le support du dispositif d'amortissement pendulaire est solidaire du volant primaire du double volant amortisseur, ou réalisé d'une seule pièce avec ce dernier.

Dans le cas d'un double volant amortisseur, la plage de valeurs donnée de vitesse de rotation du vilebrequin sur laquelle on détermine le signe de l'inertance du composant peut présenter une borne inférieure, et on peut choisir la valeur d'ordre à laquelle est accordé le dispositif d'amortissement pendulaire comme supérieure à l'ordre d'excitation du moteur thermique, de manière à ce que ledit rapport ait un signe négatif sur cette plage de valeurs donnée de vitesse de rotation du vilebrequin.

La plage de valeurs est par exemple l'ensemble des vitesses de rotation du vilebrequin supérieures à 500 tr/min. On sur-tune alors le dispositif d'amortissement pendulaire sur cette plage de valeurs. Le rapport entre la valeur d'ordre à laquelle est accordé le dispositif d'amortissement pendulaire et l'ordre d'excitation du moteur thermique peut alors être strictement compris entre 1 et 1,1. Pour un moteur à quatre cylindres dont on cherche à filtrer l'ordre d'excitation, le dispositif d'amortissement pendulaire peut ainsi être accordé à 2,04 pour filtrer l'ordre 2.

L'embrayage peut, lorsqu'il est associé à un double volant amortisseur, être dépourvu d'amortisseur formé par des organes de rappel élastique. Le disque de friction de l'embrayage est alors par exemple dépourvu de tels organes de rappel élastique.

Selon un autre exemple de mise en oeuvre de l'invention, le groupe motopropulseur est dépourvu de double volant amortisseur et il comprend un disque de friction comprenant un amortisseur, le composant comprenant alors:

- la boîte de vitesses,
- l'arbre de propulsion, et
- le différentiel.

Le composant désigne dans ce cas le bloc qui est :

- en aval des organes de rappel élastique formant l'amortisseur du disque de friction, et
- en amont des roues du véhicule.

Le dispositif d'amortissement pendulaire peut alors faire partie du disque de friction de l'embrayage, ayant de préférence un support solidaire du moyeu de ce disque de friction En variante, le support du dispositif d'amortissement pendulaire peut être solidaire du support des garnitures de friction.

Dans le cas où le disque de friction comprend un amortisseur, la plage de valeurs donnée de vitesse de rotation du vilebrequin sur laquelle on détermine le signe de l'inertance du composant peut présenter une borne supérieure, et on peut choisir la valeur d'ordre à laquelle est accordé le dispositif d'amortissement pendulaire comme inférieure à l'ordre d'excitation du moteur thermique, de manière à ce que ledit rapport ait un signe négatif sur cette plage de valeurs donnée de vitesse de rotation du vilebrequin.

La plage de valeurs est par exemple l'ensemble des vitesses de rotation du vilebrequin inférieures à 2500 tr/min. On sous-tune alors le dispositif d'amortissement pendulaire sur cette plage de valeurs. Le rapport entre la valeur d'ordre à laquelle est accordé le dispositif d'amortissement pendulaire et l'ordre d'excitation du moteur thermique peut alors être strictement compris entre 0,9 et 1. Pour un moteur à trois cylindres dont on cherche à filtrer l'ordre d'excitation, le dispositif d'amortissement pendulaire peut ainsi être accordé à 1,45 pour filtrer l'ordre 1,5.

Selon encore un autre exemple de mise en oeuvre de l'invention, le groupe motopropulseur comprend une boîte de vitesses associée à un amortisseur, et le composant comprend alors:

- la boîte de vitesses,
- l'arbre de propulsion, et
- le différentiel.

Dans un tel cas, l'amortisseur peut ne comprendre qu'un seul étage d'organes de rappel élastique. Le support du dispositif d'amortissement pendulaire peut être :

- solidaire de l'entrée de l'amortisseur, auquel cas on sur-tune ce dispositif d'amortissement pendulaire, ou
- solidaire de la sortie de l'amortisseur, auquel cas on sur- tune ce dispositif d'amortissement pendulaire.

En variante, dans un tel cas, l'amortisseur peut comprendre deux étages d'organes de rappel élastique montés en série. Le support du dispositif d'amortissement pendulaire peut alors être :

- solidaire de l'entrée du premier étage de l'amortisseur, auquel cas on sur-tune ce dispositif d'amortissement pendulaire, ou

- solidaire à la fois de la sortie du premier étage de l'amortisseur et de l'entrée du deuxième étage de l'amortisseur, auquel cas on sous-tune ce dispositif d'amortissement pendulaire, ou
- solidaire de la sortie du deuxième étage de l'amortisseur, auquel cas on sur-tune ce dispositif d'amortissement pendulaire.

La boîte de vitesses peut être une boîte robotisée mécanique, une boîte robotisée à actionnement manuel ou une boîte robotisée hydraulique. Cette boîte de vitesses est par exemple associée à un convertisseur de couple hydrodynamique, auquel cas l'amortisseur précité, à un ou deux étages d'organes de rappel élastique, peut faire partie du convertisseur de couple hydrodynamique.

Au sens de la présente demande, l'accord du corps pendulaire à la valeur d'ordre sur-tunée ou sous-tunée peut être obtenu en agissant sur tout ou partie des paramètres suivants :

- forme de la piste de roulement solidaire du corps pendulaire, cette piste étant notamment définie par chaque organe de liaison du corps pendulaire,
- forme de la piste de roulement solidaire du support, cette piste étant notamment définie par une partie du bord d'une fenêtre recevant l'organe de liaison,
- moment d'inertie du corps pendulaire,
- distance, lorsque le dispositif est au repos, entre le centre de gravité du corps pendulaire et l'axe de rotation du support,
- distance, lorsque le dispositif est au repos, entre le centre de gravité du corps pendulaire et le point d'accrochage du corps pendulaire sur le support, et
- forme des organes de roulement du corps pendulaire.

Selon l'un quelconque des exemples de mise en oeuvre ci-dessus, on peut choisir le moment d'inertie du dispositif d'amortissement pendulaire de manière à augmenter la valeur absolue de l'inertance de ce dispositif d'amortissement pendulaire. Le fait d'augmenter la valeur absolue de l'inertance du dispositif d'amortissement pendulaire permet de réduire la valeur de l'inertance globale du composant et du dispositif d'amortissement pendulaire lorsque cette inertance globale est égale à la somme algébrique des deux inertances précitées et que ces deux inertances sont de signe contraire. On améliore ainsi la filtration des oscillations de torsion.

On choisit par exemple la valeur du moment d'inertie du dispositif d'amortissement pendulaire de manière à ce que l'inertance globale précitée soit inférieure à 90% de l'inertance du composant seul.

Dans tout ce qui précède, le dispositif d'amortissement pendulaire comprend par exemple plusieurs corps pendulaires, par exemple un nombre compris entre deux et huit, notamment trois ou six corps pendulaires.

Tous ces corps pendulaires peuvent se succéder circonférentiellement. Le dispositif peut ainsi comprendre une pluralité de plans perpendiculaires à l'axe de rotation dans chacun desquels tous les corps pendulaires sont disposés.

Chaque corps pendulaire est alors accordé à une valeur d'ordre déterminée selon le procédé ci-dessus.

Plusieurs dispositifs d'amortissement pendulaire distincts peuvent être intégrés au groupe motopropulseur, par exemple en des emplacements différents de ce dernier, et chacun de ces dispositifs peut avoir une valeur d'ordre déterminée à l'aide du procédé ci-dessus.

Le support du dispositif d'amortissement pendulaire peut être unique et il peut être réalisé d'une seule pièce.

Chaque corps pendulaire peut comprendre :

- une première et une deuxième masses pendulaires espacées axialement l'une par rapport à l'autre et mobiles par rapport au support, la première masse pendulaire étant disposée axialement d'un premier côté du support, et la deuxième masse pendulaire étant disposée axialement d'un deuxième côté du support, et
- au moins un organe de liaison de la première et de la deuxième masses pendulaires appariant lesdites masses.

Le dispositif peut comprendre au moins un organe de roulement coopérant d'une part avec une piste de roulement solidaire du support, et d'autre part avec au moins une piste de roulement solidaire du corps pendulaire, pour guider le déplacement du corps pendulaire par rapport au support.

L'organe de roulement peut coopérer avec la piste de roulement solidaire du support et avec la piste de roulement solidaire du corps pendulaire uniquement via sa surface extérieure. Ainsi, une même portion de cette surface extérieure peut coopérer alternativement avec la piste de roulement solidaire du support et avec la piste de roulement solidaire du corps pendulaire lorsque l'organe de roulement se déplace.

L'organe de liaison peut être disposé dans une fenêtre ménagée dans le support.

Selon un exemple de mise en oeuvre de l'invention, la piste de roulement solidaire du corps pendulaire est définie par l'organe de liaison. Autrement dit, l'organe de roulement coopère d'une part avec le support, et d'autre part avec l'organe de liaison, pour guider le déplacement du corps pendulaire par rapport au support. Selon cet exemple, une seule et même fenêtre ménagée dans le support accueille une partie de l'organe de liaison et présente un bord dont une partie définit la piste de roulement solidaire du support. Chaque organe de roulement peut être uniquement sollicité en compression entre les pistes de roulement mentionnées ci-dessus. La piste de roulement solidaire du support et la piste de roulement solidaire du corps pendulaire et coopérant avec un même organe de roulement peuvent être au moins en partie radialement en regard, c'est-à-dire qu'il existe des plans perpendiculaires à l'axe de rotation dans lesquels ces pistes de roulement s'étendent toutes les deux.

Selon une variante, le corps pendulaire peut définir deux pistes de roulement distinctes, une piste de roulement étant définie dans la première masse pendulaire et une piste de roulement étant définie dans la deuxième masse pendulaire. La première et la deuxième masse pendulaire présentent par exemple une cavité recevant l'organe de roulement et une partie du bord de cette cavité forme la piste de roulement correspondante. La portion de l'organe de roulement disposée axialement entre la première et la deuxième masse pendulaire est reçue dans une cavité du support, cette cavité étant distincte de la fenêtre dans laquelle l'organe de liaison est reçu.

Selon cette variante, l'organe de roulement peut alors comprendre successivement :

- une portion disposée dans une cavité de la première masse pendulaire et coopérant avec la piste de roulement formée par une partie du bord de cette cavité,
- une portion disposée dans une cavité du support et coopérant avec la piste de roulement formée par une partie du bord de cette cavité, et
- une portion disposée dans une cavité de la deuxième masse pendulaire et coopérant avec la piste de roulement formée par une partie du bord de cette cavité.

Chaque corps pendulaire peut être muni d'un ou plusieurs organes d'amortissement de butée, permettant de réduire les chocs entre le corps pendulaire et le support à l'issue d'un déplacement du corps pendulaire depuis la position de repos et/ou en cas de chute radiale du corps pendulaire, par exemple lors de l'arrêt du moteur thermique du véhicule. Au sens de la présente demande, la position de repos du corps pendulaire est la position dans laquelle ce corps pendulaire est soumis à une force centrifuge mais ne filtre pas d'oscillations de torsion.

Chaque organe d'amortissement de butée est par exemple disposé radialement entre le bord radialement intérieur de l'organe de liaison et le bord radialement intérieur de la fenêtre.

Dans un exemple particulier de mise en oeuvre de l'invention, chaque corps pendulaire comprend deux organes de liaison, chaque organe de liaison coopère avec un organe de roulement, et chaque organe de liaison est associé à un organe d'amortissement de butée.

Chaque organe d'amortissement de butée peut présenter des propriétés élastiques permettant l'amortissement des chocs liés à la venue en contact du corps pendulaire et du support. Chaque organe d'amortissement de butée est par exemple réalisé en élastomère ou en caoutchouc.

Des fenêtres distinctes du support peuvent alors être associées à un même corps pendulaire, chaque fenêtre recevant l'un des organes de liaison et l'organe de roulement associé.

Dans tout ce qui précède, une pièce d'interposition, encore appelée « patin », peut être prévue pour s'interposer axialement entre le support et les masses pendulaires, de manière à éviter les chocs axiaux entre ces derniers.

Dans tout ce qui précède, chaque organe de roulement est par exemple un rouleau de section circulaire dans un plan perpendiculaire à l'axe de rotation du support. Les extrémités axiales du rouleau peuvent être dépourvues de rebord annulaire fin. Le rouleau est par exemple réalisé en acier. Le rouleau peut être creux ou plein.

Dans tout ce qui précède, la forme des pistes de roulement peut être telle que les corps pendulaires soient uniquement déplacés par rapport au support en translation autour d'un axe fictif parallèle à l'axe de rotation du support.

En variante, la forme des pistes de roulement peut être telle que les corps pendulaires soient déplacés par rapport au support à la fois :

- en translation autour d'un axe fictif parallèle à l'axe de rotation du support et,
- également en rotation autour du centre de gravité dudit corps pendulaire, un tel mouvement étant encore appelé « mouvement combiné » et divulgué par exemple dans la demande DE 10 2011 086 532.

Le moteur thermique du groupe motopropulseur peut comprendre deux, trois, quatre, cinq ou six cylindres, voire plus.

Dans tout ce qui précède, l'embrayage peut être simple ou double. Il peut s'agir d'un embrayage normalement ouvert ou d'un embrayage normalement fermé.

L'invention a encore pour objet, selon un autre de ses aspects, un groupe motopropulseur de véhicule, comprenant un dispositif d'amortissement pendulaire ayant une valeur d'ordre choisie à l'aide du procédé tel que défini ci-dessus. Il s'agit par exemple d'un groupe motopropulseur de type hybride.

Tout ou partie des caractéristiques mentionnées précédemment s'applique encore à cet autre aspect de l'invention.

L'invention pourra être mieux comprise à la lecture de la description qui va suivre d'exemples non limitatifs de mise en oeuvre de celle-ci et à l'examen du dessin annexé sur lequel :

- la figure 1 représente sous forme de blocs un groupe motopropulseur de véhicule,
- la figure 2 représente un exemple de dispositif d'amortissement pendulaire intégré au groupe motopropulseur,
- la figure 3 représente sur un même graphe le rapport entre l'inertance d'un dispositif d'amortissement pendulaire intégré au groupe motopropulseur et un composant de ce groupe motopropulseur lorsque le groupe motopropulseur comprend un double volant amortisseur, pour deux valeurs d'ordre différentes du dispositif d'amortissement pendulaire, et

- la figure 4 représente sur un même graphe le rapport entre l'inertance d'un dispositif d'amortissement pendulaire intégré au groupe motopropulseur et un composant de ce groupe motopropulseur lorsque le groupe motopropulseur est dépourvu de double volant amortisseur, pour deux valeurs d'ordre différentes du dispositif d'amortissement pendulaire.

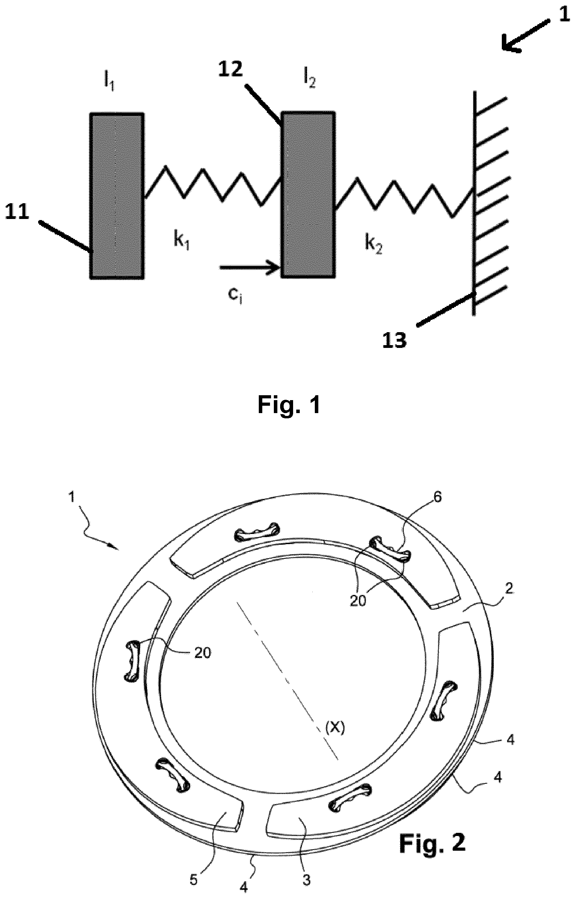

La figure 1 représente de façon schématique un groupe motopropulseur 10 de véhicule. Ce groupe motopropulseur 1 peut être modélisé par composants 11 et 12, un bâti 13 et deux organes de rappel élastique uniques $k_1$ et $k_2$, respectivement interposés entre le composant 11 et le composant 12 et entre le composant 12 et le bâti 13.

Le composant 11 regroupe le moteur thermique de propulsion du véhicule, ce dernier comprenant par exemple deux, trois ou quatre cylindres, ainsi que toutes les pièces rigidement couplées au vilebrequin de ce moteur thermique.

Le composant 12 regroupe ici des pièces mobiles en rotation via l'organe de rappel élastique $k_1$ par rapport au vilebrequin.

Le bâti 13 correspond dans les exemples considérés à l'inertie des roues motrices du véhicule et ainsi qu'à l'inertie du véhicule.

L'organe de rappel élastique $k_2$ modélise la raideur des arbres de transmission disposés en aval de la boîte de vitesses.

Le groupe motopropulseur comprend en outre un dispositif d'amortissement pendulaire 1 dont un exemple est représenté sur la figure 2.

Le dispositif 1 comprend dans l'exemple considéré :

- un support 2 apte à se déplacer en rotation autour d'un axe X qui est ici l'axe du groupe motopropulseur 10, et
- une pluralité de corps pendulaires 3 mobiles par rapport au support 2.

Dans l'exemple considéré, trois corps pendulaires 3 sont prévus, étant répartis de façon uniforme sur le pourtour de l'axe X.

Le support 2 du dispositif d'amortissement 1 peut être constitué par :

- un élément d'entrée d'un amortisseur de torsion du groupe motopropulseur,
- un élément de sortie de cet amortisseur, ou
- un élément de phasage intermédiaire disposé entre deux séries de ressort de cet amortisseur, ou

- un élément lié en rotation à un des éléments précités et distinct de ces derniers, étant alors par exemple un support propre au dispositif 1.

Le support 2 est notamment une rondelle de guidage ou une rondelle de phasage. En variante, le support 2 est un flasque du composant.

Dans l'exemple considéré, le support 2 présente globalement une forme d'anneau comportant deux côtés opposés 4 qui sont ici des faces planes.

Comme on le devine sur la figure 1, chaque corps pendulaire 3 comprend dans l'exemple considéré :

- deux masses pendulaires 5, chaque masse pendulaire 5 s'étendant axialement en regard d'un côté 4 du support 2, et
- deux organes de liaison 6 solidarisant les deux masses pendulaires 5.

Chaque masse pendulaire 5 présente ainsi une face disposée axialement en regard d'un côté 4 du support 2 et une autre face, opposée à cette face.

Les organes de liaison 6, encore appelés « entretoises », sont dans l'exemple considéré décalés angulairement.

Chaque organe de liaison 6 s'étend en partie dans une fenêtre ménagée dans le support 2. Dans l'exemple considéré, la fenêtre définit un espace libre à l'intérieur du support, cette fenêtre étant délimitée par un contour fermé. Chaque organe de liaison 6 est solidarisé à chaque masse pendulaire 5 d'un corps pendulaire 3, étant par exemple emmanché en force dans une ouverture ménagée dans ladite masse pendulaire 5 et qui est visible sur la figure 2.

Le dispositif 1 comprend encore des organes de roulement guidant le déplacement des corps pendulaires 3 par rapport au support 2. Les organes de roulement sont ici des rouleaux présentant une section transversale circulaire.

Dans l'exemple de la figure 2, le mouvement par rapport au support 2 de chaque corps pendulaire 3 est guidé par deux organes de roulement, chacun d'entre eux coopérant avec l'un des organes de liaison 6 de la masse pendulaire 3.

Comme on peut le voir sur la figure 2, le dispositif 1 peut également comprendre des moyens d'amortissement de butée 20 aptes à venir simultanément en contact avec un organe de liaison 6 et avec le support 2 dans certaines positions relatives du support 2 et des corps pendulaires 3, telles que les positions de venue en butée à l'issue d'un déplacement depuis la position de repos lors du filtrage d'une oscillation de torsion. Chaque moyen d'amortissement de butée 20 est ici solidaire d'un corps pendulaire 3

L'invention est fondée sur l'étude de l'inertance du composant 12 et sur l'étude de l'inertance du dispositif d'amortissement pendulaire 1. On utilisera par la suite les notations suivantes :

- $\theta_1$ est l'angle de rotation du composant 11 autour de l'axe du groupe motopropulseur par rapport à une position d'origine,
- $I_1$ est le moment d'inertie du composant 11,
- $\theta_2$ est l'angle de rotation du composant 12 autour de l'axe du groupe motopropulseur par rapport à une position d'origine,
- $I_2$ est le moment d'inertie du composant 12,
- $C_i$ est le couple associé à une oscillation de torsion qui est appliqué sur le composant 12,
- $\theta_P$ désigne l'angle de rotation du centre de gravité du corps pendulaire unique modélisant tous les corps pendulaires 3 du dispositif 1 autour de l'axe X du groupe motopropulseur par rapport à une position d'origine,
- $I_p$ est le moment d'inertie du dispositif 1,
- $C_p$ désigne le couple associé à l'oscillation de torsion et qui est appliqué sur le dispositif d'amortissement pendulaire 1,
- $n_e$ est l'ordre d'excitation du moteur thermique que l'on cherche à filtrer à l'aide du dispositif d'amortissement pendulaire 1,
- $\omega$ désigne le produit de la vitesse de rotation du vilebrequin et de $n_e$, et
- $n_p$ est la valeur d'ordre à laquelle est accordé le dispositif 1.

On obtient les équations suivantes :

$$\begin{cases} I_1\ddot{\theta}_1 = -k_1(\theta_1 - \theta_2) \\ I_2\ddot{\theta}_2 = k_1(\theta_1 - \theta_2) - k_2\theta_2 + C_i \end{cases}$$

En se plaçant dans l'approximation linéaire, on peut exprimer l'inertance $A_{cc}$ du composant 12 comme suit

$$A_{cc} = \frac{\ddot{\theta}_2}{C_i} = \frac{-\omega^2[k_1 - I_1\omega^2]}{[k_1 + k_2 - I_2\omega^2][k_1 - I_1\omega^2] - k_1^2}$$

On peut par ailleurs exprimer l'inertance $A_p$ du dispositif d'amortissement pendulaire 1 comme suit :

$$A_p = \frac{\ddot{\theta}_p}{C_p} = \left| \frac{-n_e^2}{I_p(n_p^2 - n_e^2)} \right|$$

On constate ainsi que le signe de l'inertance $A_p$ du dispositif d'amortissement pendulaire 1 dépend directement et exclusivement du signe de la différence entre :

- $n_e$, c'est-à-dire l'ordre d'excitation du moteur thermique du groupe motopropulseur 10 que l'on cherche

à filtrer, et
- $n_p$, c'est-à-dire la valeur d'ordre à laquelle est accordé le dispositif d'amortissement pendulaire 1 pour obtenir ce filtrage.

Le choix de la valeur de $n_p$ suffit ainsi pour fixer le signe de l'inertance $A_p$ du dispositif d'amortissement pendulaire 1. On observe par contre que le signe de l'inertance $A_{cc}$ du composant 12 peut changer selon la vitesse de rotation du vilebrequin.

L'invention repose sur le constat selon lequel le dispositif d'amortissement pendulaire 1 et le composant 12 doivent avoir des inertances de signe opposée pour permettre une filtration des oscillations de torsion.

Ainsi, connaissant une plage de valeurs donnée de vitesse de rotation du vilebrequin, on détermine le signe de l'inertance $A_{cc}$ sur cette plage de valeurs et on choisit ensuite la valeur d'ordre $n_p$ à laquelle est accordé le dispositif d'amortissement pendulaire 1 pour que l'inertance $A_p$ du dispositif d'amortissement pendulaire 1 soit de signe contraire au signe de l'inertance $A_{cc}$ sur cette plage de valeurs donnée. Ainsi, selon l'application visée, on va choisir $n_p$ supérieur à $n_e$, c'est-à-dire sur-tuner le dispositif 1, ou on va choisir $n_p$ inférieur à $n_e$, c'est-à-dire sous-tuner le dispositif 1.

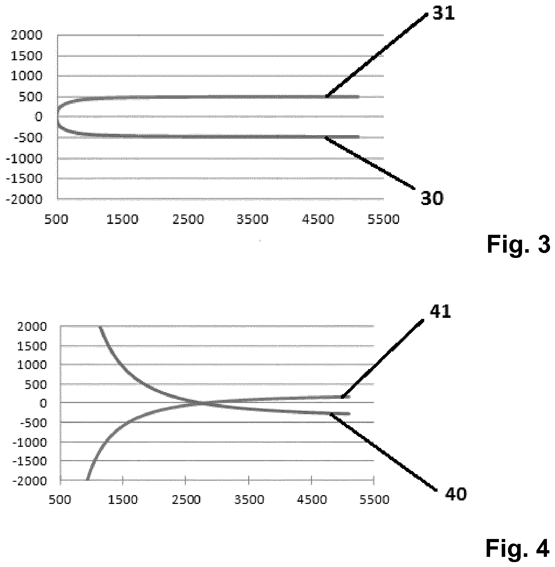

Dans l'exemple qui va être décrit en référence à la figure 3, le groupe motopropulseur 10 comprend un double volant amortisseur. Dans ce cas :

- le composant 11 modélise le moteur thermique avec le vilebrequin, les bielles, les pistons, la face avant, et le volant primaire du double volant amortisseur,
- l'organe de rappel élastique $k_1$ modélise l'organe de rappel élastique du double volant amortisseur, notamment des ressorts ou un système de type came-lame, et
- le composant 12 modélise le volant secondaire du double volant amortisseur avec l'embrayage, la boîte de vitesses, l'arbre de propulsion et le différentiel.

Les éléments $k_2$ et 13 sont tels que déjà mentionnés précédemment.

Dans le cas présent, on cherche à amortir les oscillations de torsion à l'ordre d'excitation du moteur thermique du groupe motopropulseur à partir d'un seuil de vitesse donné, c'est pourquoi la plage de valeurs donnée sur laquelle on étudie le signe de l'inertance $A_{cc}$ du composant 12 présente une borne inférieure.

La figure 3 représente deux courbes 30 et 31 qui ont été obtenues avec les données suivantes :

- $I_1 = I_2 = 0.2\,kgm^2$;
- $k_1 = 15\,Nm/°$,
- $k_2 = 36\,Nm/°$,
- $n_e = 2$, c'est-à-dire que le moteur thermique du véhicule est à quatre cylindres,
- $R_g = 0.1m$ (c'est-à-dire le rayon du centre de gravité de chaque corps pendulaire, ce rayon restant constant d'un corps pendulaire à l'autre),

- m=lkg (c'est-à-dire la masse globale du dispositif d'amortissement pendulaire 1, cette masse globale étant obtenue en sommant la masse du support 2, la masse des organes de roulement, et la masse des corps pendulaires 3).

Ces courbes 30 et 31 représentent respectivement :

- le rapport en fonction de la vitesse de rotation du vilebrequin exprimée en tr/min entre l'inertance $A_p$ du dispositif d'amortissement pendulaire 1 et l'inertance $A_{cc}$ du composant 12 lorsque le dispositif 1 est sur-tuné à une valeur de 2,04, et
- le rapport en fonction de la vitesse de rotation du vilebrequin exprimée en tr/min entre l'inertance $A_p$ du dispositif d'amortissement pendulaire 1 et l'inertance $A_{cc}$ du composant 12 lorsque le dispositif 1 est sous-tuné à une valeur de 1,96.

On constate ainsi que, dans la plage de valeurs donnée qui regroupe ici les valeurs de vitesse de rotation du vilebrequin supérieures à 500 tr/min, il faut sur-tuner le dispositif 1 pour que les inertances ci-dessus soient de signes opposés. Dans le cas présent, on sur-tune ce dispositif 1 de moins de 10% par rapport à l'ordre d'excitation du moteur thermique que l'on cherche à filtrer.

Dans l'exemple qui vient d'être décrit, le dispositif 1 est par exemple intégré au double volant amortisseur. Dans un tel cas, le support 2 peut être rigidement couplé au volant secondaire de ce double volant amortisseur ou encore être réalisé d'une seule pièce avec ce volant secondaire.

Dans l'exemple qui va être décrit en référence à la figure 4, le groupe motopropulseur 10 est dépourvu de double volant amortisseur et le disque de friction de l'embrayage comprend un amortisseur mettant en oeuvre un organe de rappel élastique. Dans ce cas :

- le composant 11 modélise le moteur thermique avec le vilebrequin, les bielles, les pistons, la face avant, et toute la partie de l'embrayage en amont de l'amortisseur du disque de friction,
- l'organe de rappel élastique $k_1$ modélise l'organe de rappel élastique de l'amortisseur du disque de friction, tel que des ressorts ou un système de type came-lame, et
- le composant 12 modélise le moyeu du disque de friction, la boîte de vitesses, l'arbre de propulsion et le différentiel.

Les éléments $k_2$ et 13 sont tels que déjà mentionnés précédemment.

Dans le cas présent, on cherche à amortir les oscillations de torsion à l'ordre d'excitation du moteur thermique du groupe motopropulseur en dessous d'un seuil de vitesse donné, c'est pourquoi la plage de valeurs donnée sur laquelle on étudie le signe de l'inertance $A_{cc}$ du composant 12 présente une borne supérieure.

La figure 4 représente deux courbes 40 et 41 qui ont été obtenues avec les données suivantes :

- $I_1$=0.2kgm$^2$;
- $I_2$=16,5gm$^2$
- $k_1$=15Nm/°,
- $k_2$=36 Nm/°,
- $n_e$=1,5, c'est-à-dire que le moteur thermique du véhicule est à trois cylindres,
- $R_g$=0.055m (c'est-à-dire le rayon du centre de gravité de chaque corps pendulaire, ce rayon restant constant d'un corps pendulaire à l'autre),
- m=0,033kg (c'est-à-dire la masse globale du dispositif 1, cette masse globale étant obtenue en sommant la masse du support 2, la masse des organes de roulement, et la masse des corps pendulaires 3).

Ces courbes 40 et 41 représentent respectivement :

- le rapport en fonction de la vitesse de rotation du vilebrequin exprimée en tr/min entre l'inertance $A_p$ du dispositif d'amortissement pendulaire 1 et l'inertance $A_{cc}$ du composant 12 lorsque le dispositif 1 est sur-tuné à une valeur de 1,53, et
- le rapport en fonction de la vitesse de rotation du vilebrequin exprimée en tr/min entre l'inertance $A_p$ du dispositif d'amortissement pendulaire 1 et l'inertance $A_{cc}$ de l'inertie 12 lorsque le dispositif 1 est sous-tuné à une valeur de 1,45.

On constate ainsi que, dans la plage de valeurs considéré, qui regroupe ici les valeurs de vitesse de rotation du vilebrequin inférieures à 2500 tr/min, il faut sous-tuner le dispositif 1 pour que les inertances ci-dessus soient de signes opposés. Dans le cas présent, on sous-tune ce dispositif 1 de moins de 10% par rapport à l'ordre d'excitation du moteur thermique.

Dans tout ce qui vient d'être dit, le dispositif d'amortissement pendulaire 1 est avantageusement dimensionné, via le choix de sa masse et du rayon du centre de gravité des corps pendulaires 3, de manière à ce que son moment d'inertie soit réduit. On s'assure ainsi que le moment d'inertie $I_p$ du dispositif d'amortissement pendulaire 1 aura une valeur absolue élevée. Lorsque le dispositif d'amortissement pendulaire 1 est intégré au composant 12, de par le fonctionnement en parallèle du dispositif 1 qui est en dehors du chemin du couple transmis, l'inertance globale du composant 12 prenant en compte la présence du dispositif lest la somme algébrique des inertances $A_{cc}$ et $A_p$. Lorsque ces inertances sont de signes opposés, comme mentionné ci-dessus, le fait d'avoir une valeur absolue élevée pour $A_p$ permet de réduire la valeur de l'inertance globale $A_{cc}+A_p$. On améliore ainsi le filtrage apporté par le dispositif d'amortissement pendulaire 1. On choisit par exemple la valeur du moment d'inertie I du dispositif d'amortissement pendulaire 1 de manière à ce que l'inertance globale $A_{cc}+A_p$ soit inférieure à 90% de l'inertance $A_{cc}$.

## Revendications

1. Procédé de détermination du signe de la différence entre:

    - l'ordre d'excitation ($n_e$) du moteur thermique d'un groupe motopropulseur (10) que l'on cherche à filtrer, et
    - la valeur d'ordre ($n_p$) à laquelle est accordé le dispositif d'amortissement pendulaire (1) permettant ce filtrage,

    procédé **caractérisé en ce que**, connaissant l'expression, en fonction de la vitesse de rotation du vilebrequin, de l'inertance ($A_{cc}$) d'un composant (12) du groupe motopropulseur (10) disposé dans le chemin du couple en aval du vilebrequin et en amont des roues du véhicule:

    - on détermine le signe de cette inertance ($A_{cc}$) sur une plage de valeurs donnée de vitesse de rotation du vilebrequin, et
    - on choisit le signe de la différence entre les valeurs d'ordre ($n_e$, $n_p$) ci-dessus de manière à ce que le rapport entre l'inertance ($A_p$) du dispositif d'amortissement pendulaire (1) et l'inertance ($A_{cc}$) de ce composant (12) du groupe motopropulseur (10) ait un signe négatif sur cette plage de valeurs donnée de vitesse de rotation du vilebrequin.

2. Procédé selon la revendication 1, dans lequel le dispositif d'amortissement pendulaire (1) est intégré au composant (12) du groupe motopropulseur (10).

3. Procédé selon la revendication 1 ou 2, dans lequel le groupe motopropulseur comprend un double volant amortisseur et dans lequel le composant comprend :

    - le volant secondaire du double volant amortisseur,
    - l'embrayage,
    - la boîte de vitesses,
    - l'arbre de propulsion, et
    - le différentiel.

4. Procédé selon la revendication 3, dans lequel la plage de valeurs donnée de vitesse de rotation du vilebrequin présente une borne inférieure, et dans lequel on choisit la valeur d'ordre ($n_p$) à laquelle est accordé le dispositif d'amortissement pendulaire (1) comme supérieure à l'ordre d'excitation ($n_e$) du moteur thermique, de manière à ce que ledit rapport ($A_p/A_{cc}$) ait un signe négatif sur cette plage de valeurs donnée de vitesse de rotation du vilebrequin.

5. Procédé selon la revendication 3 ou 4, dans lequel le support (2) du dispositif d'amortissement pendulaire (1) est solidaire du volant secondaire du double volant amortisseur ou réalisé d'une seule pièce avec ce volant secondaire.

6. Procédé selon la revendication 1 ou 2, dans lequel le groupe motopropulseur (10) est dépourvu de double volant amortisseur et comprend un disque de friction comprenant un amortisseur, le composant (12) comprenant alors:

    - la boîte de vitesses,
    - l'arbre de propulsion, et
    - le différentiel.

7. Procédé selon la revendication 6, dans lequel la plage de valeurs donnée de vitesse de rotation du vilebrequin présente une borne supérieure, et dans lequel on choisit la valeur d'ordre ($n_p$) à laquelle est accordé le dispositif d'amortissement pendulaire (1) comme inférieure à l'ordre d'excitation ($n_e$) du moteur thermique, de manière à ce que ledit rapport ($A_p/A_{cc}$) ait un signe négatif sur cette plage de valeurs donnée de vitesse de rotation du vilebrequin.

8. Procédé selon la revendication 6 ou 7, dans lequel le dispositif d'amortissement pendulaire (1) est intégré au disque de friction de l'embrayage du groupe motopropulseur (10).

9. Procédé selon la revendication 1 ou 2, dans lequel le groupe motopropulseur (10) comprend une boîte de vitesses et un amortisseur, et dans lequel le composant (12) comprend :

    - la boîte de vitesses,
    - l'arbre de propulsion, et
    - le différentiel.

10. Procédé selon l'une quelconque des revendications précédentes, dans lequel on choisit en outre le moment d'inertie ($I_p$) du dispositif d'amortissement pendulaire (1) de manière à augmenter la valeur absolue de l'inertance ($A_p$) de ce dispositif d'amortissement pendulaire (1).

11. Groupe motopropulseur de véhicule, comprenant un dispositif d'amortissement pendulaire (1) ayant une valeur d'ordre ($n_p$) choisie à l'aide du procédé selon l'une quelconque des revendications précédentes.

**Patentansprüche**

1. Verfahren zur Vorzeichenbestimmung der Differenz zwischen:

   - der Anregungsordnung ($n_e$) des Verbrennungsmotors eines Antriebsstrangs (10), die zu filtern, angestrebt wird, und
   - der Ordnung ($n_p$), auf welche die Pendel-Dämpfungsvorrichtung (1), welche diese Filterung ermöglicht, abgestimmt ist,

   wobei das Verfahren **dadurch gekennzeichnet ist, dass**, unter Kenntnis des Ausdrucks in Abhängigkeit der Kurbelwellendrehgeschwindigkeit, der Trägheit ($A_{cc}$) einer Komponente (12) des Antriebsstrangs (10), welche im Drehmomentsübertragungsweg nach der Kurbelwelle und vor den Rädern des Fahrzeugs angeordnet ist:

   - das Vorzeichen dieser Trägheit ($A_{cc}$) in einem gegebenen Wertebereich der Kurbelwellendrehzahl bestimmt wird, und
   - das Vorzeichen der Differenz zwischen den obigen Ordnungen ($n_e$, $n_p$) bestimmt wird, so dass das Verhältnis zwischen der Trägheit ($A_p$) der Pendel-Dämpfungsvorrichtung (1) und der Trägheit ($A_{cc}$) dieser Komponente (12) des Antriebsstrangs (10) ein negatives Vorzeichen in dem gegebenen Wertebereich der Kurbelwellendrehzahl aufweist.

2. Verfahren nach Anspruch 1, bei welchem die Pendel-Dämpfungsvorrichtung (1) in die Komponente (12) des Antriebsstrangs (10) integriert ist.

3. Verfahren nach Anspruch 1 oder 2, bei welchem der Antriebsstrang einen Doppelschwungraddämpfer aufweist, und bei welchem die Komponente aufweist:

   - das sekundäre Schwungrad des Doppelschwungraddämpfers,
   - die Kupplung,
   - das Getriebe,
   - die Antriebswelle und
   - das Differential.

4. Verfahren nach Anspruch 3, bei welchem der gegebene Wertebereich der Kurbelwellendrehzahl eine untere Grenze aufweist, und bei welchem die Ordnung ($n_p$), auf welche die Pendel-Dämpfungsvorrichtung (1) abgestimmt ist, größer als die Anregungsordnung ($n_e$) des Verbrennungsmotors gewählt wird, so dass das Verhältnis ($A_p/A_{cc}$) ein negatives Vorzeichen in diesem gegebenen Wertebereich der Kurbelwellendrehzahl aufweist.

5. Verfahren nach Anspruch 3 oder 4, bei welchem der Träger (2) der Pendel-Dämpfungsvorrichtung (1) fest mit dem sekundären Schwungrad des Doppelschwungraddämpfers verbunden oder als einstückig mit diesem sekundären Schwungrad ausgeführt ist.

6. Verfahren nach Anspruch 1 oder 2, bei welchem der Antriebsstrang (10) ohne Doppelschwungraddämpfer ist und eine Reibscheibe aufweist, welche einen Dämpfer aufweist, wobei die Komponente (12) nun aufweist:

   - das Getriebe,
   - die Antriebswelle und
   - das Differential.

7. Verfahren nach Anspruch 6, bei welchem der gegebene Wertebereich der Kurbelwellendrehzahl eine obere Grenze aufweist, und bei welchem die Ordnung ($n_p$), auf welche die Pendel-Dämpfungsvorrichtung (1) abgestimmt ist, kleiner als die Anregungsordnung ($n_e$) des Verbrennungsmotors gewählt wird, so dass das Verhältnis ($A_p/A_{cc}$) ein negatives Vorzeichen in diesem gegebenen Wertebereich der Kurbelwellendrehzahl aufweist.

8. Verfahren nach Anspruch 6 oder 7, bei welchem die Pendel-Dämpfungsvorrichtung (1) in die Reibscheibe der Kupplung des Antriebsstrangs (10) integriert ist.

9. Verfahren nach Anspruch 1 oder 2, bei welchem der Antriebsstrang (10) ein Getriebe und einen Dämpfer aufweist, und bei welchem die Komponente (12) aufweist:

   - das Getriebe,
   - die Antriebswelle und
   - das Differential.

10. Verfahren nach einem der vorhergehenden Ansprüche, bei welchem außerdem das Trägheitsmoment ($I_p$) der Pendel-Dämpfungsvorrichtung (1) gewählt wird, so dass der absolute Wert der Trägheit ($A_p$) dieser Pendel-Dämpfungsvorrichtung (1) erhöht wird.

11. Antriebsstrang eines Kraftfahrzeugs, aufweisend eine Pendel-Dämpfungsvorrichtung (1), welche eine Ordnung ($n_p$) aufweist, welche mit Hilfe des Verfahrens nach einem der vorhergehenden Ansprüche gewählt wird.

**Claims**

1. Method for determining the sign of the difference between:

- the order of excitation ($n_e$) of the combustion engine of a power train (10) that it is sought to filter, and
- the order value ($n_p$) to which the pendular damping device (1) allowing this filtering is tuned,

which method is **characterized in that**, knowing the expression, as a function of the rotational speed of the crankshaft, of the inertance ($A_{cc}$) of a component (12) of the power train (10) arranged in the torque path downstream of the crankshaft and upstream of the wheels of the vehicle:

- the sign of this inertance ($A_{cc}$) is determined over a given range of values for the rotational speed of the crankshaft, and
- the sign of the difference between the order values ($n_e$, $n_p$) above is chosen in such a way that the ratio between the inertance ($A_p$) of the pendular damping device (1) and the inertance ($A_{cc}$) of this component (12) of the power train (10) has a negative sign over this given range of values for the rotational speed of the crankshaft.

2. Method according to Claim 1, in which the pendular damping device (1) is integrated into the component (12) of the power train (10).

3. Method according to Claim 1 or 2, in which the power train comprises a dual mass flywheel and in which the component comprises:

- the secondary flywheel of the dual mass flywheel,
- the clutch,
- the gearbox,
- the propulsion shaft, and
- the differential.

4. Method according to Claim 3, in which the given range of values for the rotational speed of the crankshaft has a lower limit, and in which the order value ($n_p$) to which the pendular damping device (1) is tuned is chosen to be greater than the order of excitation ($n_e$) of the combustion engine in such a way that the said ratio ($A_p/A_{cc}$) has a negative sign over this given range of values for the rotational speed of the crankshaft.

5. Method according to Claim 3 or 4, in which the support (2) of the pendular damping device (1) is secured to the secondary flywheel of the dual mass flywheel or produced in one piece with this secondary flywheel.

6. Method according to Claim 1 or 2, in which the power train (10) is devoid of a dual mass flywheel and comprises a friction disc comprising a damper, the component (12) then comprising:

- the gearbox,
- the propulsion shaft, and
- the differential.

7. Method according to Claim 6, in which the given range of values for the rotational speed of the crankshaft has an upper limit, and in which the order value ($n_p$) to which the pendular damping device (1) is tuned is chosen to be lower than the order of excitation ($n_e$) of the combustion engine in such a way that the said ratio ($A_p/A_{cc}$) has a negative sign over this given range of values for the rotational speed of the crankshaft.

8. Method according to Claim 6 or 7, in which the pendular damping device (1) is integrated into the friction disc of the clutch of the power train (10) .

9. Method according to Claim 1 or 2, in which the power train (10) comprises a gearbox and a damper, and in which the component (12) comprises:

- the gearbox,
- the propulsion shaft, and
- the differential.

10. Method according to any one of the preceding claims, in which the moment of inertia ($I_p$) of the pendular damping device (1) is initially chosen so as to increase the absolute value of the inertance ($A_p$) of this pendular damping device (1).

11. Vehicle power train comprising a pendular damping device (1) having an order value ($n_p$) chosen with the aid of the method according to any one of the preceding claims.

**Fig. 1**

**Fig. 2**

Fig. 3

Fig. 4

**RÉFÉRENCES CITÉES DANS LA DESCRIPTION**

**Documents brevets cités dans la description**

- FR 3020429
- DE 102011086532